# EUROPEAN PATENT APPLICATION

(11) **EP 1 212 933 A2**
(43) Date of publication of application: **12.06.2002**
(21) Application number: 01128779.4
(22) Date of filing: 03.12.2001
(51) Int. Cl.: A01C 15/00, A01B 73/02

(54) **Foldable sowing machine**

(30) Priority: 07.12.2000 DK 200001841
(71) Applicant: KNK I/S, 7870 Roslev (DK)
(72) Inventor: Kaastrup, Soren, 7870 Roslev (DK); Knudsen, Marinus, 7870 Roslev (DK); Nielsen, Kjeld, 7870 Roslev (DK)
(74) Representative: Nielsen, Leif

(57) **Abstract**

Sowing machine comprising a central frame supporting a central hopper and two side frames that each support a secondary hopper, which is connected to and filled from the central hopper through an auger conveyor, each of the side frames being interchangeable between a working position largely perpendicular to a transport direction and a transport position where they are substantially parallel with the transport direction, where at least each secondary hopper has a sowing unit attached and comprising a number of downcomer pipes, **characterized** in that the secondary hoppers are arranged to be lifted free of the attached sowing unit, and in that each secondary hopper is mounted on a substantially vertical axle in order to pivot in a horizontal plane in relation to the side frame, that each side frame is mounted on a substantially horizontal axle in relation to the central frame and comprises a parallelogram in order to pivot in a largely vertical plane with the hopper maintained in a vertical position, and that the height of the central hopper is less than the width of the side frame in order for the secondary hoppers to be pivoted in over the central hopper.

## Description

The present invention relates to a sowing machine comprising a central frame supporting a central hopper and two side frames that each support a secondary hopper, which is connected to and filled from the central hopper through an auger conveyor, each of the side frames being interchangeable between a working position largely perpendicular to a transport direction and a transport position where they are substantially parallel with the transport direction, where at least each secondary hopper has a sowing unit attached and comprising a number of downcomer pipes.

The invention primarily relates to the construction of the sowing machine. However, the central frame may be supported by a central frame or may constitute a part of a central frame for a harrow in a combined tool, which prepares the seedbed simultaneously with the sowing.

For many years there has been a demand for a continuously increasing width on work tools such as sowing machines, harrows, rollers etc. However, it is also demanded that these are able to fold together so that the transport width is lesser.

In connection with the sowing machine, several solutions have been suggested in order to establish a large working width.

The use of pneumatic sowing machines has been suggested where a central hopper supplies one or several separate hoppers which have been placed in the immediate vicinity of a distributor. Such systems are, however, disadvantageous since they consume a lot of energy and since there is the risk that the pneumatic transportation tubes clog at the same time.

Sowing machines with sowing units comprising traditional downcomer pipes have also been suggested. In these constructions, the sowing units are pivoted to the back and appear in continuation of a central frame. This results in a very long tool which can be inappropriate and difficult to manoeuvre.

It has been difficult, especially in combined tools, to establish an suitable working width because of the lacking space for hoppers and sowing units. This had led to a proposed separation of hopper and sowing unit so that a hopper is suspended in a lift while the sowing unit is mounted on the combined tool.

A common disadvantage of most of the known systems is a complicated construction where a combination of several hydraulic cylinders, each performing displacements, rotation turns etc., are used. Such a system which requires many actuators and moveable components becomes technically complicated and is vulnerable to errors. Furthermore, substantial capacity demands will be placed on the hydraulic pumps for the tractor used for towing the sowing machine. Thus, the number of hydraulic take-offs demanded for activating pumps or cylinders on the work tools increases.

As the demand for a larger width on agricultural working tools increases, the demand for foldability of the tools also increases since the authorities have dictated maximum transportation widths for agricultural tools.

It is the purpose of the present invention to indicate a new system which makes it possible to provide a sowing machine that is mechanically simple and which makes it possible to convert the machine from a working position to a transport position in a simple way and with the possibility of using one double-acting hydraulic pinping in order to convert the sowing machine from work position to transport position.

Particularly, the purpose is to indicate a sowing machine with this possibility which operates with traditional downcomer pipes from the hoppers and traditional cam wheels in the hoppers.

This purpose is achieved according to the present invention with a sowing machine, which is peculiar in that the secondary hoppers are arranged to be lifted free of the attached sowing unit, and in that each secondary hopper is mounted on a substantially vertical axle in order to pivot in a horizontal plane in relation to the side frame, that each side frame is mounted on a substantially horizontal axle in relation to the central frame and comprises a parallelogram in order to pivot in a largely vertical plane with the hopper maintained in a vertical position, and that the height of the central hopper is less than the width of the side frame in order for the secondary hoppers to be pivoted in over the central hopper.

As the hopper is lifted free of the associated sowing unit, it becomes possible to perform a separate pivoting of the hopper in relation to the side frame. Hereby the hopper can be pivoted from a direction perpendicular to the transport direction to a position in parallel with the transport direction before the side frame with the mounted sowing unit is pivoted about a horizontal axle. Through this pivoting about the horizontal axle, the parallelogram will have the effect that the hopper is oriented vertically so that seed in the hopper does not fall out during the conversion of the machine between working position and transport position. When the side frame is pivoted upwards to a substantially vertical position, each of the secondary hoppers may simultaneously be placed in a position above the central hopper.

By the upwards pivoting of the side frames, the sowing unit will be placed with the downcomer pipes projecting to the sides but may, alternatively, be mounted for simultaneous pivoting so that they are oriented to the rear in relation to the machine. Thus, the transport width may be further reduced.

Preferably, the side frames are placed in a position behind the central hopper. Thus, when pivoting upwards they may be disposed in a position behind the hopper, hereby enabling reduction of the transport width.

Besides hoppers and sowing units, further soil cultivating equipment may be mounted on the side frames, such as for example packing rollers or the like which are pivoted together with the side frames.

In order to achieve a simple construction where activation is carried out by means of a simple double-acting hydraulic cylinder acting on the parallelogram of the side frame, the sowing machine according to a preferred embodiment is peculiar in that between each side frame and each secondary hopper there is a driving arm and a cam which have been placed in the immediate vicinity of the vertical axle in order to activate the pivoting of the hopper about the vertical axle as a result of the pivoting of the frame in the vertical plane, as both the driving arm and cam are placed with a distance so that they only engage after a commenced lifting of the hopper has lifted the hopper free of the sowing unit, and that the cam comprises a track for receiving the driving arm so that a pivoting of the secondary frame back to the horizontal position causes the hopper to pivot back.

When the driving arm and the cam interact, the pivoting of the side frame will cause the driving arm to press against the cam so that the hopper pivots. By placing the cams and driving arm in the immediate vicinity of the vertical axle for pivoting of the hopper, the pivoting of the hopper is already established when the side frame has pivoted a very small angle.

Since a clearance has been established between the driving arm and cam, it is possible to raise the hopper free of the sowing unit when the pivoting of the side frame is commenced. Lifting the hopper free from the sowing unit enables the subsequent pivoting of the hopper about the vertical axle.

The cam will preferably comprise a track in which the driving arm is accommodated. Thus, pivoting of the side frame from the transport position to the working position will force the hopper back to its orientation perpendicular to the transport direction in the final part of the pivoting of the side frame to working position. Two separate driving plates, which are placed on each side of the driving arm, may be used as alternative to a track.

Preferably, the driving arm is placed on the side frame and the cam is placed on the hopper. However, it is also possible to use the position of these elements.

As mentioned, it is preferred to establish a sowing machine with a simple hydraulic system. Therefore, it is preferred that a double-acting hydraulic cylinder which is connected to a hydraulic source in the shape of a pump on a tractor or a pump driven by a power take-off on a tractor is mounted in between the central frame and each secondary frame.

It is possible to use the same hydraulic cylinder when converting the machine from a working position to a transport position and vice versa by reversing the oil supply to the hydraulic cylinder. At the same time, when the pivoting of the side frame is commenced, the same hydraulic cylinder will perform the lifting free of the hopper, a subsequent rotation of the hopper at the engagement of the driving arm and cam and a subsequent upwards pivoting of the side frame to a vertical position.

To ensure that the hoppers are placed correctly in a horizontal position in the working position and are placed correctly in relation to the attached sowing unit, it is preferred that they are supported on stops on the associated frame.

In order to establish a construction that is as compact as possible, it is preferred that the hopper pivots about a vertical axle which has been placed at the outer end of the hopper and thus at the outer end of the side frame. Hereby, the secondary hopper is raised to an elevated position above the central hopper which makes it possible to transport a large amount of seed.

It is possible to perform an easy emptying of the secondary hoppers by opening the bottom flap/central plate for emptying into the central hopper. From the central hopper seed can be emptied out by an auger in the outlet. Thus, the hopper can easily switch from one type of seed to another.

Alternatively, the vertical axle which is used for pivoting the hopper can be placed on the hopper at a central position. In this situation, a secondary hopper will rotate around itself instead of pivoting about an axle which is placed at one end of the hopper.

It is preferred that the sowing unit for each secondary hopper has a central plate which supports the downcomer pipes. Hereby a fixed connection is established between the lower side of the hopper and the sowing unit. In the working position, the central plate will be in contact with the exit openings of the hopper in order to ensure that the seed falls down through the downcomer pipes by activating a cam wheel in the hopper.

In order to achieve as large a working width as possible on the tool, it is preferred that the downcomer pipes extend downwards in a fan shape from the hopper. Thus, it will be possible to cover a working area of 6 metres in total with two secondary hoppers, each having a width of 1 ½ metres. Depending on the width of the fan-shaped downcomer pipes, a larger or smaller working width will be possible with a reduced width of the hoppers. By using relatively narrow hoppers, a more compact construction is achieved in the folded transport position.

In order to establish a pivoting free of the side frames and hoppers in relation to the central frame and in relation to the central hopper, the auger conveyor must disengage the outlet of the central hopper. With regard to this, the sowing machine is designed so that the auger conveyor comprises a separate auger in each secondary hopper, that each separate auger through a supporting bearing is connected to a pipe that may be displaced into the exit opening of the central hopper, that each separate auger comprises an internal thread engaging a central threaded rod which is connected to a motor and which is mounted in an internal thread inside the hopper, that the separate auger has a transverse pin that, by the rotation of the motor, is able to interact with one or the other side of a fixed stop extending over a part of the length of the auger, whereby the threaded rod, by interacting between the pin and the stop, is forced to rotate in the thread and thereby to displace the auger with a length corresponding to the length of the stop, thus bringing the auger to engage an outlet opening in the central hopper or to draw the auger back into the secondary hopper, respectively.

Furthermore, after its displacement into the outlet opening, the auger is brought to rotate together with the threaded rod when the pin has passed the stop. Hereby, seed is transferred to the secondary hopper. The motor will preferably be driven electrically and will be connected to level phials which start and stop the motor depending on the seed level in the attached secondary hopper. In order to reduce the weight of the hopper and its contents, the level phials are able to control the contents.

It is mentioned above that the sowing machine can be mounted in a combined tool. Alternatively, it is possible to make the sowing machine alone as the supporting wheel, which is mounted on the central frame, is also provided with a towing rod for connecting to a tractor. Alternatively, it is possible to suspend the sowing machine in a lift as the central frame in this case is attached to the lift suspension of the tractor. Through a such mounting, the tractor is able to comprise tools for preparing the seed-beds in a front mounted lift, whereby a needed balance/distribution of weight is established.

In the following the invention will be explained in more detail with reference to the accompanying drawing, where:
- Fig. 1: shows a perspective view of a sowing machine according to the invention seen from the rear with the secondary hoppers placed in working position,
- Fig. 2: shows a perspective view of the sowing machine shown in Fig. 1 as seen from the front,
- Fig. 3: shows a perspective view of the sowing machine shown in Fig. 1 and 2 seen from the front with the secondary hoppers and side frames in transport position,
- Fig. 4: shows a perspective view corresponding to Fig. 3 of the sowing machine seen from the rear,
- Fig. 5: shows a perspective view seen from the rear of the sowing machine mounted on a harrow in a combined tool,
- Fig. 6: shows a view of the combined tool shown in Fig. 5 as seen from the rear,
- Fig. 7: shows a view of the sowing machine seen from the rear with the auger conveyor in working position,
- Fig. 8: shows a view seen from the rear with the auger conveyor in a withdrawn position ready to change into the transport position,
- Fig. 9: illustrates the movement of the auger conveyor when shifting between transport position and working position,
- Fig. 10: shows a view of a side box with a secondary hopper as seen from the rear in working position,
- Fig. 11: shows a partial view of a detail of Fig. 10 for illustrating driving arm and cam,
- Fig. 12: shows a view corresponding to Fig. 10 for illustrating a middle position where the hopper is pivoted and where the side frames are under pivoting to a vertical position, and
- Fig. 13: shows a detail of the construction in Fig. 12 for illustrating the driving arm and the cam.

Note that the different figures are illustrated with certain parts removed for the sake of clarity.

In the different figures of the drawing, identical or corresponding elements will be referred to with the same reference number. Thus, a specific explanation is not given for each individual figure.

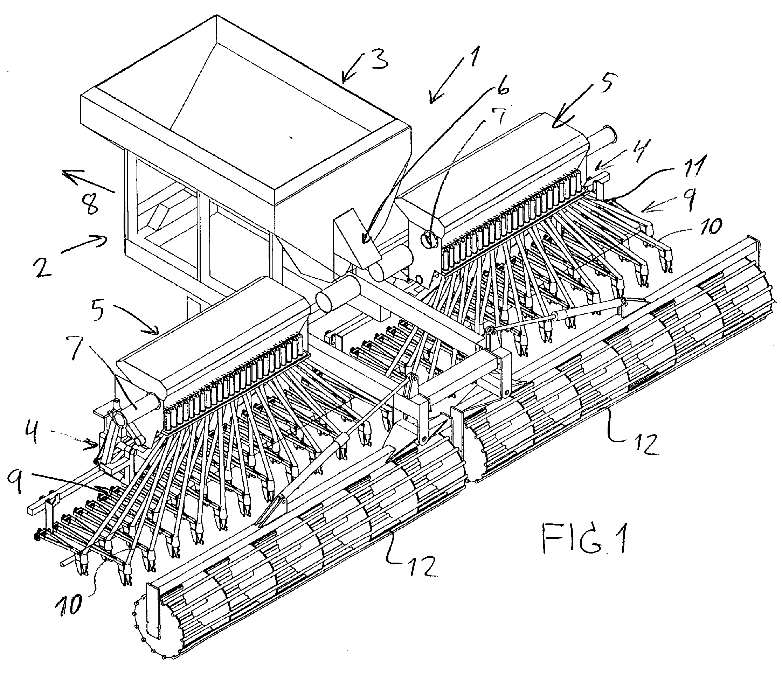

Fig. 1 illustrates a sowing machine 1 having a central frame 2 which supports a central hopper 3. Furthermore, the central frame 2 supports two side frames 4, each supporting a secondary hopper 5. Each of the two secondary hoppers 5 are connected with the central hopper 3 through an outlet 6 and through auger conveyors 7. In the working position each secondary hopper 5 is arranged substantially perpendicular to a transport direction 8, each comprising a sowing unit 9, which comprises downcomer pipes 10 disposed in fan-shape and mounted on a central plate 11 under the hoppers 5. Thus, the fan-shaped downcomer pipes cover a working width which in the situation shown is six metres when using the hoppers, each with a width of about 1 ½ metres.

In the shown embodiment the sowing machine further comprises packing rollers 12, which are suspended on the central frame 2.

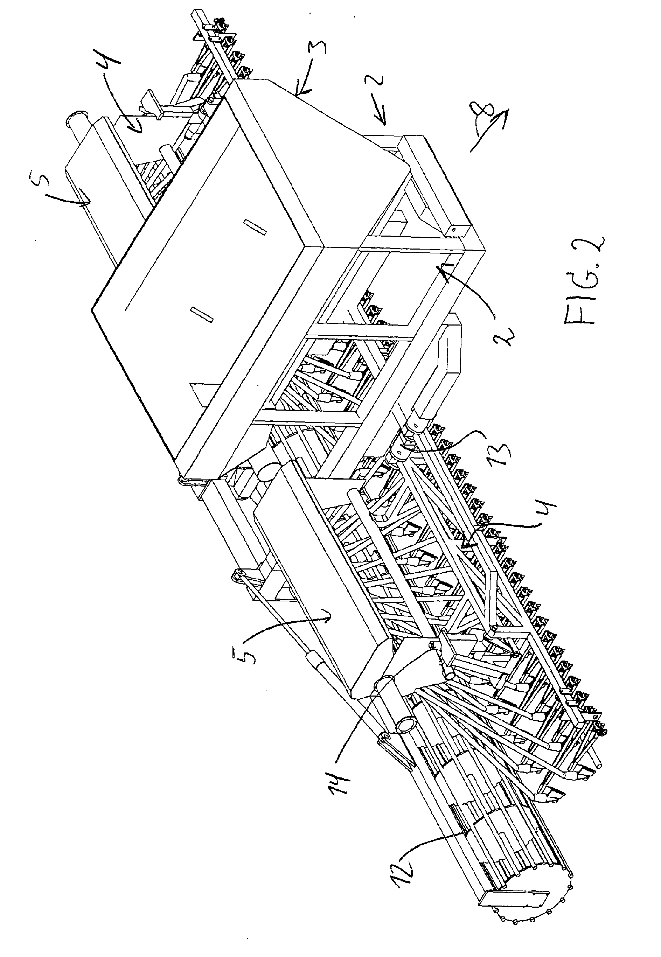

Fig. 2 illustrates the sowing machine shown in Fig. 1 from the front, and here it is clear that each side frame 4 comprises a parallelogram which is mounted for rotating around a largely horizontal axle 13 on the central arm 2. Each hopper 5 is mounted pivotably about a substantially vertical axle 14 which is fastened to the side frame 4.

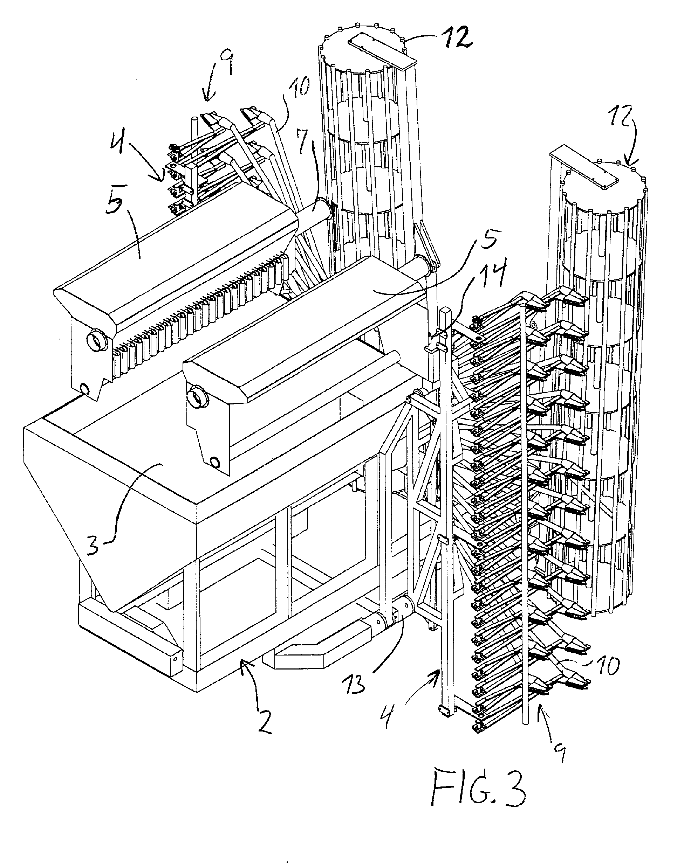

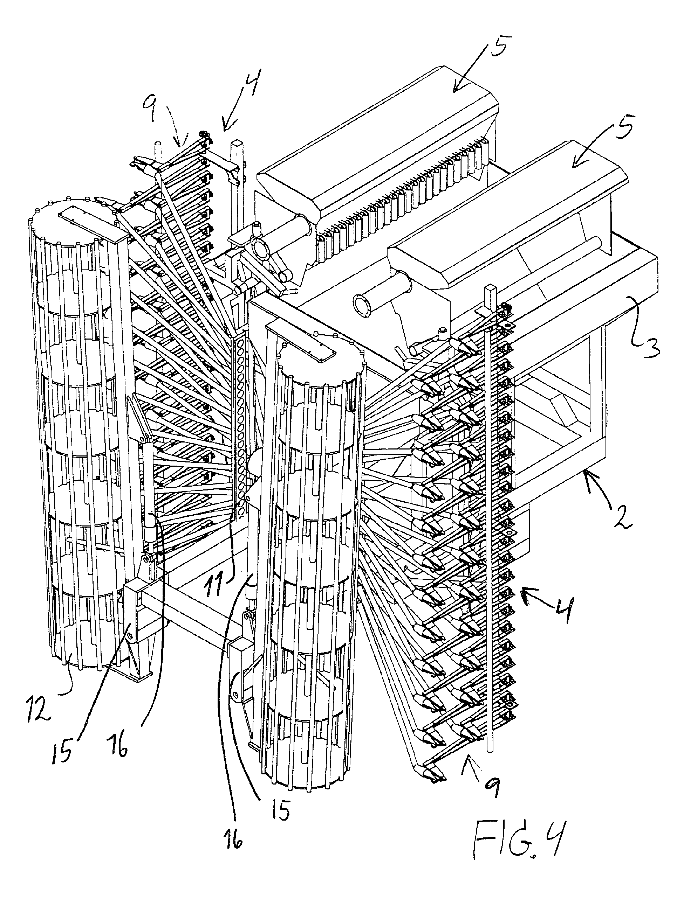

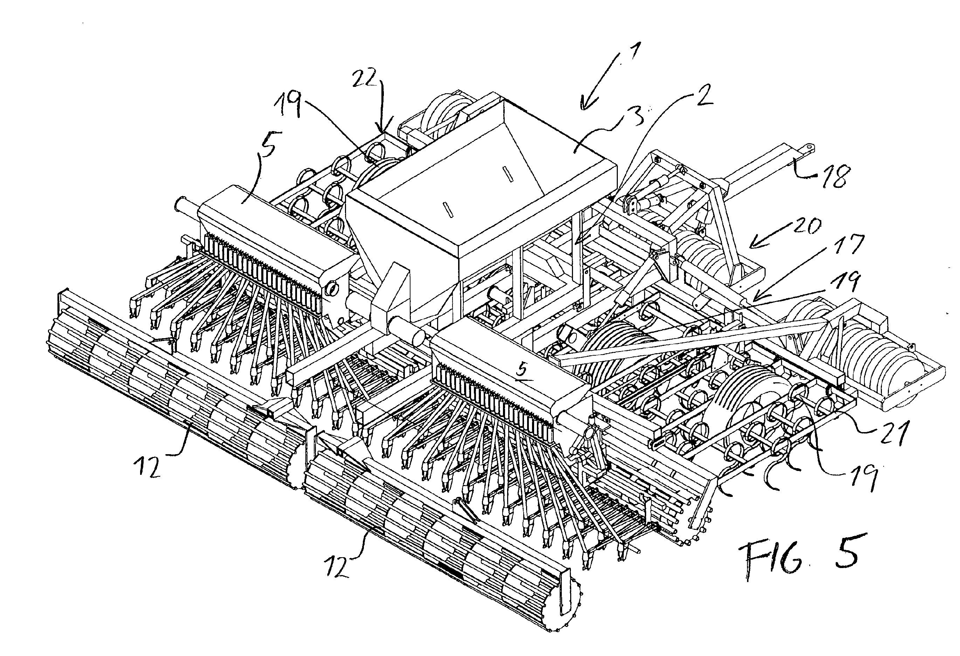

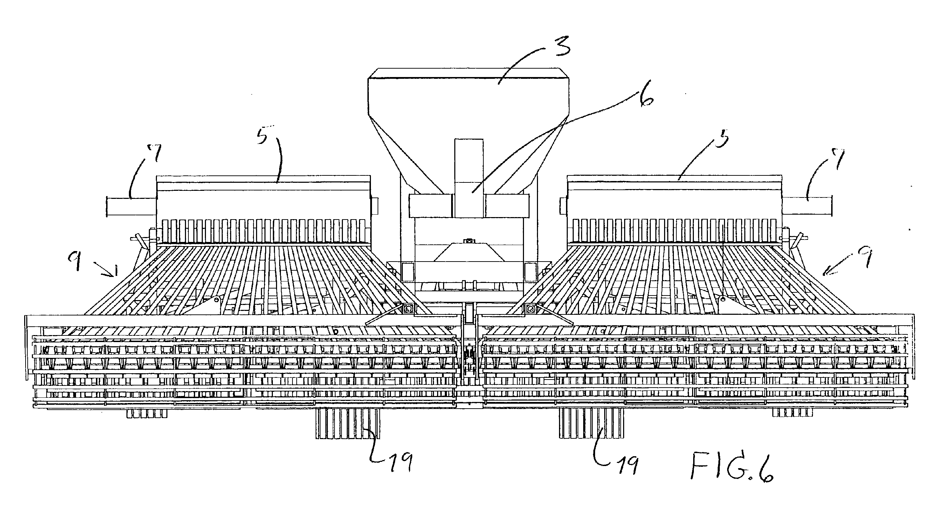

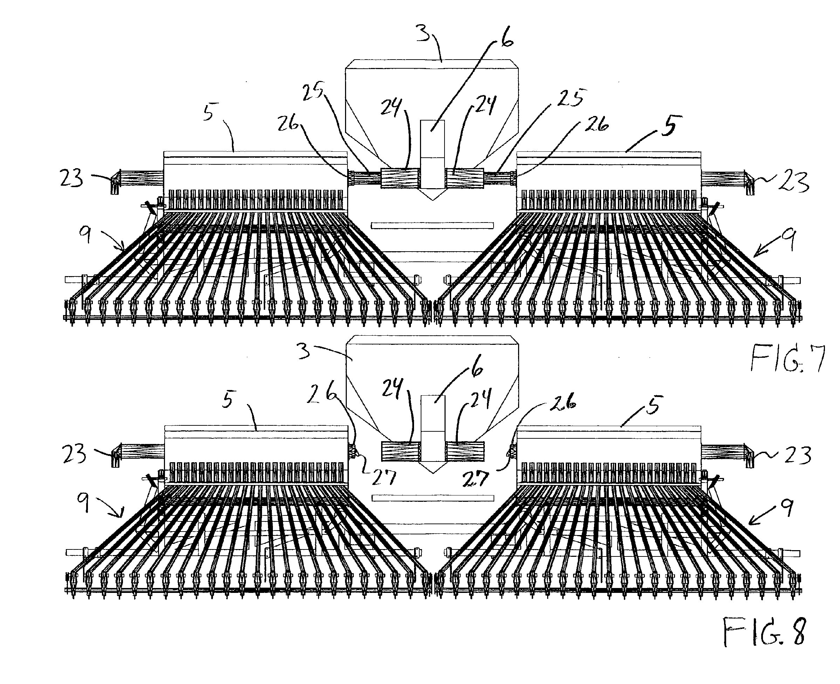

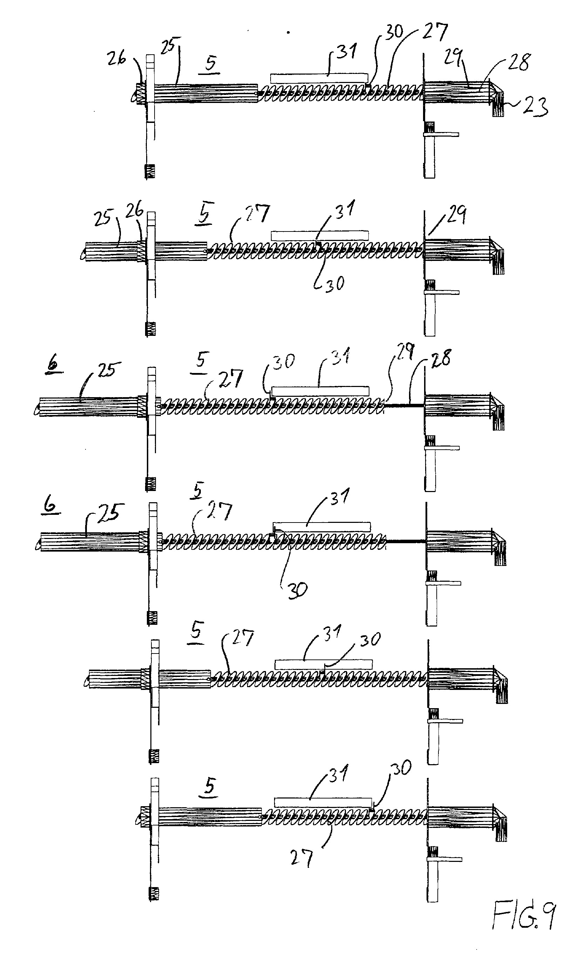

In Figs. 3 and 4 the apparatus is seen in a transport position where each of the hoppers have been lifted free of the associated sowing units 9 and are pivoted to a position around the central hopper 3. Prior to the establishment of the pivoting, the auger conveyor 7 has been brought to its withdrawn position indicated in the Figures, which means to a position where the auger conveyor has disengaged the outlet 6.

It appears from the Figures that the axle 14, which initially had a vertical orientation in the working position, is still orientated substantially vertical in the transport position. Due to the parallelogram construction of the side frame 4, each secondary hopper 5 is maintained with a vertical orientation during the entire movement and in its position in the transport position. Thus, seed will not run out of the hopper 5.

As it particularly appears from Fig. 4, the side frames with the mounted sowing units 9 have been pivoted to a vertical position as the central plate 11 is positioned vertically and is facing each other and the downcomer pipes 10 project laterally. Since the side frames are mounted in a position behind the central hopper 3, as most clearly indicated in Fig. 4, the pivoting of the side frames can be led to a position behind the central hopper in order to reduce the width of the machine in the transport position. The packing rollers 12 are at the same time pivoted to a vertical position, as they are suspended pivotably about axles 15 and are activated by cylinders 16.

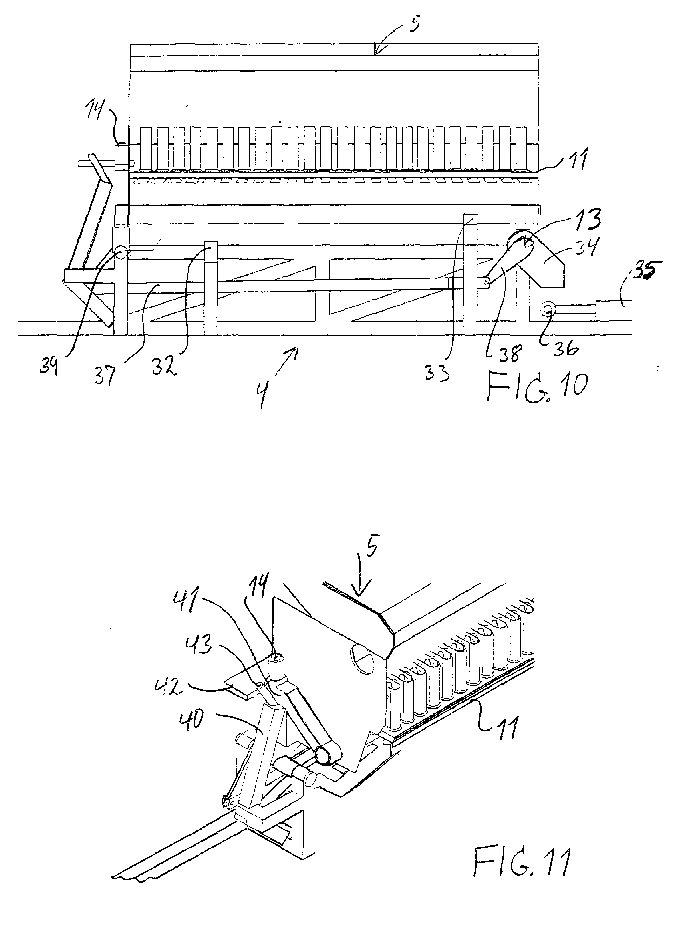

In Figs. 5 and 6, the sowing machine in Figs. 1-4 is illustrated mounted on a harrow 17 provided with a tow bar 18 for mounting on a tractor and which comprises a supporting wheel 19 supporting the harrow and thus the central frame 2 of the sowing machine. The harrow 17 comprises a central component 20 and two foldable side wings 21 and 22. Due to the pivoting of the hoppers 5 to a position above the central hopper 3, there will also be room for pivoting the side wings 21 and 22 upwards so that the combined tool in its transport position will have a total width corresponding to the one illustrated in Figs. 3 and 4.

Fig. 6 illustrates a combined tool in a position where it is raised on the transport wheels 19 but with the side frames 4 and the side wings 21, 22 dropped. The auger conveyor 7 is in a position where it has not yet been engaged with the outlet opening 6.

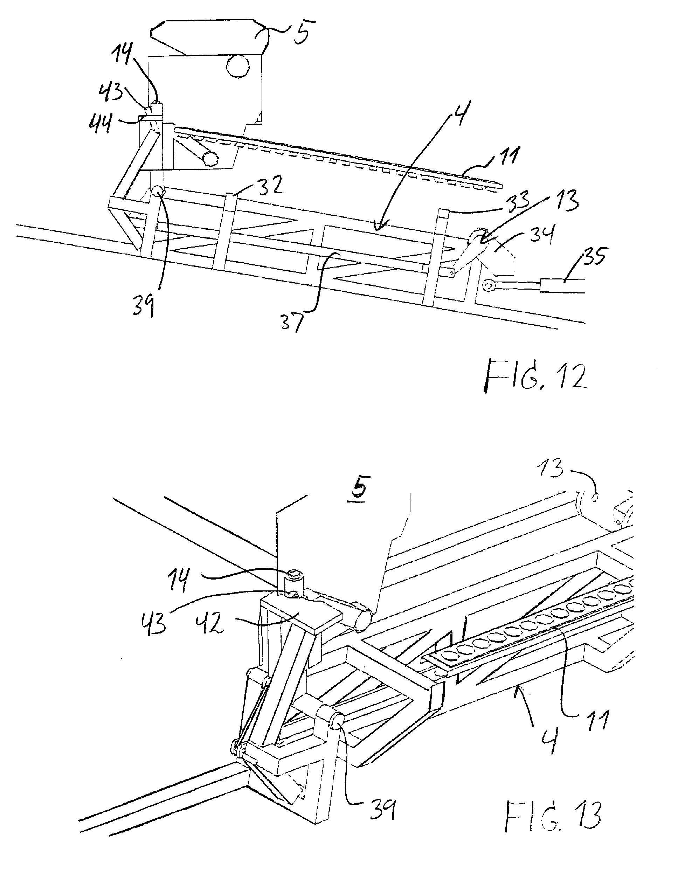

Fig. 7 illustrates the sowing machine as seen from the rear, where the auger conveyor 7, which is driven by a motor 23, is displaced into engagement with pipes 24 in the outlet 6 of the central hopper 3. In this position a supporting pipe 25 is projecting from an outer pipe 26 around the auger conveyor in order to extend into the pipes 24 with an internally provided auger 27 as will be explained with reference to Fig. 9.

In Fig. 8 the motor 23 is activated in order to withdraw the connecting pipe 25 and the mounted auger 27 from the pipes 24. In Fig. 7 the sowing machine is thus ready for the transfer of seed from the central hopper 3 to the secondary hoppers 5 through the auger 27. In Fig. 8 the sowing machine is made ready by withdrawal of the connecting pipe 25 and the auger 27, thus preparing it to fold together for the transport position.

In Fig. 9 the working of the auger conveyor is illustrated. In the top three views, the auger is moved from its withdrawn position in the secondary hopper 5 to the left for engagement with the pipes 24 (shown in Fig. 7). In the last three views, the auger 27 and supporting pipe 25 are moved back to the position inside the secondary hopper 5.

The motor 23 drives a threaded rod 28 in the direction of rotation corresponding to the direction in which it must be turned in order to loosen a bolt with right-handed thread. The threaded rod 28 is mounted in an internal thread 29. The auger 27 has a transverse pin 30 which can make contact against a slide rail 31 when the motor has rotated the threaded rod 28 together with the auger 27. When the pin 13 is in contact with the slide plate 31, the auger 27 can no longer rotate. Hereby, the thread rod 8 will rotate in the internal thread 29, so that the auger 27, the connecting pipe 25 and a supporting bearing 32 in direction away from the motor until the pin 31, as shown in the third view from above, is free of the slide rail 31. When this happens, the auger 27 will again rotate together with the thread rod 28, so that seed is transferred from the outlet 6 of the central hopper to each of the secondary hoppers.

When the auger is to be withdrawn, the direction of rotation of the motor 23 is reversed. Hereby the auger 27 will change its direction of rotation until the pin 30 has been retracted and hits the slide rail 31 from the opposite side. Thus, the auger 27 is again held fixed against rotation and will, together with the connecting pipe 25, be moved to the right in the direction of the motor 23 until the pin 30 once again is free of the slide rail 31, as illustrated in the bottom view. Thus, the auger 27 is again able to begin its rotation. In this position the motor is stopped and the secondary hopper 25 is ready to be transferred to the transport position.

In Figs. 10 and 11, a partial view of a side frame 4 and the hopper 5 is illustrated. As it appears, the hopper 5 rests against stops 32, 33 and a level stop 34 so that a desired level of the hopper 5 is established in relation to the sowing unit (not shown). The level stop 34 ensures that the hopper 5 and frame 4 are not lowered to a level lower than previously established, namely a horizontal position. The side frame 4 is activated by a cylinder 35 which is mounted on the central frame 2 and which on the free end 36 of its piston is connected with the side frame 4 through a fitting not shown so that the side frame rotates about the axle 13.

A commencing activation of the piston 35 will pivot the frame 4 upwardly through a small angle whereby the hopper 5, which is supported by the axle 14, is lifted from the stops 32, 33. Through this lifting, the hopper 5 is liberated from the central plate 11 supported by the downcomer pipes 10. During the lifting, a parallelogram rod 37 which is mounted on a plate 38 at the level stop 34 will ensure that a mutual position/angle between the axle 13 and an axle 39 is maintained. When an initial lifting of the hopper 5 has been established, a driving arm 40 affects a cam or stop 41 on the hopper. This takes place at a position in the immediate vicinity of the axle 14. Hereby, the hopper 5 is pivoted 90° about the axle 14 to the position shown in Fig. 12.

By the initial part of the lifting, the hopper 5 is turned in a horizontal plane around the axle 14. Thus, the establishment of the necessary free space for the lifting of hopper 5 to a position above the central hopper 3 is ensured. By the turning of hopper 5, a plate 42 is pivoted which is fixed to the cam around the projecting component 43 of the driving arm 40, as clearly indicated in Fig. 13 where the hopper 5 is pivoted through 90°. By the subsequent activation of the cylinder 35 in order to lower the side frame 4, the engagement between the plate 42 and the projecting component 43 of the driving arm 40 will establish a forced turning of the hopper 5 back through an angle of 90° in order to be lowered into a working position shown in Fig. 10 again.

Thus, as indicated above, a combined pivoting in a vertical plane of the side frame 4 and a rotation of the hopper 5 about the vertical axle 14 is established solely by activating the cylinder 35. It is a matter of a simple technical construction with a parallelogram which interacts with the cam 41, 42 and driving arm 40 as well as its extension 43. Thus, a combined pattern of movement has been established for the individual components of a single activating organ in the shape of the cylinder 35.

This simplifies the construction and minimises the demands for hydraulic take-offs from the tractor used for driving the sowing machine.

## Claims

1. Sowing machine comprising a central frame supporting a central hopper and two side frames that each support a secondary hopper, which is connected to and filled from the central hopper through an auger conveyor, each of the side frames being interchangeable between a working position largely perpendicular to a transport direction and a transport position where they are substantially parallel with the transport direction, where at least each secondary hopper has a sowing unit attached and comprising a number of downcomer pipes, **characterized in that** the secondary hoppers are arranged to be lifted free of the attached sowing unit, and **in that** each secondary hopper is mounted on a substantially vertical axle in order to pivot in a horizontal plane in relation to the side frame, that each side frame is mounted on a substantially horizontal axle in relation to the central frame and comprises a parallelogram in order to pivot in a largely vertical plane with the hopper maintained in a vertical position, and that the height of the central hopper is less than the width of the side frame in order for the secondary hoppers to be pivoted in over the central hopper.

2. Sowing machine according to claim 1, **characterized in that** in between each side frame and each secondary hopper there is a driving arm and a cam which have been placed in the immediate vicinity of the vertical axle in order to activate the pivoting of the hopper about the vertical axle as a result of the pivoting of the frame in the vertical plane, as both the driving arm and cam are placed with a distance so that they only engage after a commenced lifting of the hopper has lifted the hopper free of the sowing unit, and that the cam comprises a track for receiving the driving arm so that a pivoting of the secondary frame back to the horizontal position causes the hopper to pivot back.

3. Sowing machine according to claim 1 or 2, **characterized in that** a double-acting hydraulic cylinder which is connected to a hydraulic source in the shape of a pump on a tractor or a pump driven by a power take-off on a tractor is mounted in between the central frame and each secondary frame.

4. Sowing machine according to any of the preceding claims, **characterized in that** each secondary hopper in a working position is supported by stops on the associated secondary frame.

5. Sowing machine according to any of the preceding claims, **characterized in that** the hopper is pivoted about a vertical axle which has been placed at the outer end of the hopper.

6. Sowing machine according to any of the preceding claims, **characterized in that** the sowing unit has a central plate for each secondary hopper which supports the downcomer pipes and which in the working position is in contact around exit openings of the hopper, and that the downcomer pipes extend downwards in fan shape from the hopper.

7. Sowing machine according to any of the preceding claims, **characterized in that** the sowing unit is mounted on the secondary frame in order to pivot together with said frame to a substantially vertical position.

8. Sowing machine according to any of the preceding claims, **characterized in that** it is mounted on the frame for a harrow in a combined tool.

9. Sowing machine according to any of the preceding claims, **characterized in that** the auger conveyor comprises a separate auger in each secondary hopper, that each separate auger through a supporting bearing is connected to a pipe that may be displaced into the exit opening of the central hopper, that each separate auger comprises an internal thread engaging a central threaded rod which is connected to an motor and which is mounted in an internal thread inside the hopper, that the separate auger has a transverse pin that, by the rotation of the motor, is able to interact with one or the other side of a fixed stop extending over a part of the length of the auger, whereby the threaded rod, by interacting between the pin and the stop, is forced to rotate in the thread and thereby to displace the auger with a length corresponding to the length of the stop, thus bringing the auger to engage an outlet opening in the central hopper or to draw the auger back into the secondary hopper, respectively.

10. Sowing machine according to claim 9, **characterized in that** the auger, after its displacement into the outlet opening, is brought to rotate together with the threaded rod when the pin has passed the stop whereby seed is transferred to the secondary hopper.
